Europäisches Patentamt

European Patent Office

Office européen des brevets

(11) Veröffentlichungsnummer: **0 274 042**
**A2**

## (12) EUROPÄISCHE PATENTANMELDUNG

(21) Anmeldenummer: 87117342.3

(22) Anmeldetag: 25.11.87

(51) Int. Cl.4: **G01D 3/02**

(30) Priorität: 22.12.86 DE 3644013

(43) Veröffentlichungstag der Anmeldung:
**13.07.88 Patentblatt 88/28**

(84) Benannte Vertragsstaaten:
**DE FR GB IT**

(71) Anmelder: **Bosch-Siemens Hausgeräte GmbH
Hochstrasse 17
D-8000 München 80(DE)**

(72) Erfinder: **Koch, Thomas, Dipl.-Ing.
Hügelschanze 19
D-1000 Berlin 20(DE)**

(54) Schaltungsanordnung zur messtechnischen Erfassung und Auswertung von binären Zustandswerten.

(57) Zur meßtechnischen Erfassung von binären Zustandswerten dient ein Analogwerte erfassendes elektronisches Sensorelement, dessen Ausgangswerte über einen Analog-Digital-Wandler einer digitalen elektronischen Auswerteschaltung zugeführt werden; diese Auswerteschaltung weist eine Vergleichseinrichtung für Sollwerte mit Istwerten auf, wobei der Speicher für die Sollwerte durch Übernahme von Digitalwerte über den Analog-Digital-Wandler in Abhängigkeit von durch das Sensorelement erfaßten Werten durch einen Übernahmebefehl setzbar ist.

Xerox Copy Centre

## Schaltungsanordnung zur meßtechnischen Erfassung und Auswertung von binären Zustandswerten

Die vorliegende Erfindung bezieht sich auf eine Schaltungsanordnung zur meßtechnischen Erfassung und Auswertung von binären Zustandswerten durch eine digitale elektronische Auswertschaltung über ein Analogwerte erfassendes elektronisches Sensorelement, insbesondere zur Erfassung und Auswertung von Flüssigkeitsständen in elektrischen Haushaltsgeräten.

Zur Wasserstandsmessung, beispielsweise in elektrischen Haushaltsgeräten, werden noch verbreitet Druckdosenschalter verwendet. Bei steigendem Flüssigkeitsstand wird dabie eine Druckdosenmembrane ausgelenkt, die ihrerseits mit einem elektrischen Schaltelement zusammenarbeitet und dieses bei Erreichen eines bestimmten Niveaus je nach Erfordernis öffnet bzw. schließt. Um ein geeignetes Schaltverhalten im Bereich der Kontakte sicherzustellen, sind mechanische Schalter mit einem Federmechanismus ausgestattet, der ein im Totpunktverhalten unterliegt. Derartige Flüssigkeitsstände erfassende Einrichtungen weisen ein zumeist wünschenswerte Schalthysterese auf. Äquivalent zu diesen Druckdosenschaltern sind Erfassungseinrichtungen, bei denen der Schaltkontakt über einen Schwimmer betätigbar ist. Zumeist werden diesen Einrichtungen lediglich ein bestimmter Flüssigkeitsstand zur Auswertung zugeordnet. Diese mechanischen Erfassungseinrichtung erfodern bauliche Maßnahmen, die insbeson dere bei kleinen Flüssigkeitsgefäßen einen relativ hohen Raumbedarf beanspruchen. Im Zuge der Anwendung elektronischer Auswerteschaltungen kommen auch in vermehrtem Maße elektronische Sensorelemente zum Einsatz. So werden optische Sensorelemente, beispielsweise als Lichtschranken verwendet oder Widerstandselemente tauchen in galvanisch leitende Flüssigkeiten ein, wobei der in Abhängigkeit der Tauchtiefe veränderliche Widerstandswert dieses Sensorelements ausgewertet wird. Häufig wird als zu erfassende Meßgröße lediglich der Bool'sche Zustandswert benötigt, d.h., daß nur zu erfassen ist, ob ein bestimmter Flüssigkeitsstand erreicht bzw. unterschritten wird oder nicht. Sowohl bei den mechanischen als auch bei den elektronischen Sensoren ist das Erfordernis gegeben, diese auf ein bestimmtes Flüssigkeitsniveau einzustellen bzw. die Empfindlichkeit dieser Sensoren abzugleichen. Um optimale Ergebnisse zu erzielen, sollte dies unter den üblichen Einsatzbedingungen dieser Sensorelemente erfolgen. Die dabei zu treffenden Maßnahmen sind aufwendig.

Es ist nun Aufgabe der vorliegenden Erfindung, Maßnahmen zur meßtechnischen Erfassung und Auswertung von binären Mesßwerten bereitzustellen, welche unter Nutzung elektronischer Schaltmaßnahmen eine einfache Erfassung binärer Meßwerte ermöglichen, wobei insbesondere der Abgleich der Sensorelemente unter Schaltungsanordnung auf die Einsatzbedingungen besonders einfach durchführbar und korrigierbar ist.

Eine Schaltungsanordnung zur meßtechnischen Erfassung und Auswertung von binären Meßwerten, die diesen Anforderungen in hohem Maße genügt, ist erfindungsgemäß dadurch gekennzeichnet, daß dem Analogwerte erfassenden elektronischen Sensorelement ein Analog-Digital-Wandler nachgeschaltet ist, dessen digitale Ausgangswerte der elektronischen Auswerteschaltung zugeführt werden, daß diese Auswerteschaltung eine Vergleichseinrichtung für Sollwerte und Istwerte aufweist und daß der Speicher für die Sollwerte durch Übernahme von Digitalwerten über den Anaolog-Digital-Wandler in Abhängigkeit von durch das Sensorelement erfaßten Werten durch einen Übernahmebefehl setzbar ist.

Bei Verwendung einer derart ausgestatteten Schaltungsanordnung wird ein Analogwerte erfassendes elektronisches Sensorelement zum Einsatz gebracht, welches für das Gesamtspektrum der bestimmungsgemäß erfaßbaren Analogwerte ausgelegt ist.

Die erfaßten Analogwerte werden in elektrisch auswertbare Analogwert durch das Sensorelement umgeformt und als solche dem Analog-Digital-Wandler zugeführt. In Abhängigkeit von diesen Analogwerten transformierte digitalisierte Werte werden beispielsweise binär codiert der digitalen Auswerteschaltung zugeführt. Die Gesamtanordnung wird dadurch geeicht, daß die beiden zu überwachenden Meßzustände hergestellt werden und die dabei resultierenden binären Werte durch einen Übernahmebefehl in den Sollwertspeicher für die Meßeinrichtung übernommen werden. Damit ist unter Einsatzbedingungen ohne weitere Aufwendungen das Meßsystem geeicht. Bei Verwendung eines ensprechenden wiederbeschreibbaren Speichers kann in gleicher Art und Wiese eine korrigierende Nachjustierung durchgeführt werden. Im Meßfeld und im Meßsystem begründete Unterschiede werden somit gezielt erfaßt und abgeglichen. Im weiteren Einsatz werden die Werte im Sollwert-Speicher mit den durch die Sensoren erfaßten und über den Analog-Digital-Wandler digitalisierten Werten für Schalt-und/oder Signalisierungsmaßnahmen ausgewertet.

Beispielsweise bei Waschmaschinen oder Geschirrspülmaschinen mit Zugabe von Wirkmitteln in flüssiger Form sollen die Vorratsbehälter für diese Wirkmittel dahingehend überwacht werden, ob nach genügend Wirkmittel vorhanden ist. Diese Überwachung kann durch optische Sensoren erfolgen, deren Eigencharakteristik unterschiedlich sein kann. Unterschiede sind aber auch durch die verwendeten Wirkmittel und die durchsichtigen bzw. durchscheinenden Behälter bedingt. In derartigen Fällen ist die Schaltungsanordnung gemäß der vorliegenden Erfindung besonders vorteilhaft einsetzbar.

Nach einer bevorzugten Weiterbildung ist die erfindungsgemäße Schaltungsanordnung dadurch gekennzeichnet, daß im Sollwert-Speicher lediglich ein binärcodierter Sollwert für einen der beiden binären, meßtechnisch zu erfassenden Zustandswerte eingegeben ist. Dabei ist es zweckmäßig, daß der binärcodierte Sollwert im Sollwert-Speicher gegenüber den durch die Erfassung eingegebenen Wert in Richtung auf den entsprechend binärcodierten Wert für den weiteren binären Zustandwert verändert abgespeichert ist. Die Abspeicherung eines Zustandswerts ermöglicht die Verwendung eines entsprechend kleinen Sollwert-Speichers. Bei Vergleichen des Sollwerts mit dem jeweiligen Istwert wird in diesem Falle dahingehend ausgewertet, ob dieser Sollwert erreicht bzw. überschritten wird oder nicht. Die Verschiebung des Sollwerts im Sollwert-Speicher in Richtung auf den Gegenwert ist im Hinblick auf Meßungenauigkeiten empfehlenswert.

Nach einer anderen bevorzugten Weiterbildung ist die erfindungsgemäße Schaltungsanordnung dadurch gekennzeichnet, daß je ein binärcodierter Sollwert für die binären meßtechnisch zu erfassenden Zustandswerte vom Sollwert-Speicher übernommen und als Vergleichswert für den Betriebs-Istwert abgespeichert werden. Auch hier ist es zweckmäßig, die binärcodierten Sollwerte für die in deren Zustandswerte gegenüber den durch Erfassung eingelesenen Werte in Richtung aufeinander angenähert verändert in den Sollwert-Speicher abzuspeichern. Die Abspeicherung beider binären Zustandswerte als binärcodierte Sollwerte im Sollwert-Speicher ermöglicht die Erzeugung einer Schalthysterese. Liegt der Istwert im weiteren Betrieb zwischen diesen beiden abgespeicherten Sollwerten, so kann dies als Signal dahingehend ausgewertet werden, das Meßsystem zu überprüfen.

Als Sollwert-Speicher ist in bevorzugter Weise ein elektrisch programmierbarer Festwertspeicher (PROM) oder ein elektrisch löschbarer und programmierbarer Festwertspeicher (EEPROM) anzuordnen. Derartige Speicher sind in bekannter Weise von einer dauernden Stromversorgung unabhängig.

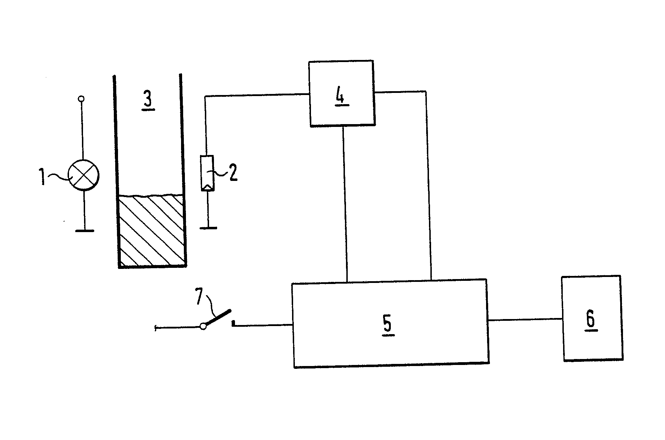

Ein nach den Merkmalen ausgestattetes Ausführungsbeispiel ist anhand der Zeichnung im folgenden kurz beschrieben.

Die Figur zeigt eine Meßeinrichtung unter Verwendung eines optischen Sensors.

Im Strahlengang einer durch eine Lichtquelle 1 und einem Fotosensor 2 gebildeten Lichtschranke befindet sich ein Behälter 3, in welchem der sich verändernde Flüssigkeitsstand dahingehend zu überwachen ist, ob ein bestimmtes Niveau erreicht ist oder nicht. Die Wandung des Behälters 3 muß im Bereich der Lichtschranke selbstverständlich für den Strahlengang durchlässig sein. Die Ausgangsspannung der Lichtschranke ist nunmehr davon abhängig, ob sich eine Flüssigkeit im Strahlengang befindet oder nicht. In der "Lernphase" mißt die Auswerteschaltung die Ausgangsspannung der Lichtschranke einmal mit und einmal ohne Flüssigkeit im Strahlengang. Die dabei erfaßten Analogwerte werden über einen Analog-Digital-Wandler (4) digitalisiert und in dieser Form an einen Microrechner 5 eingegeben. In der "Lernphase", diese wird durch einen entsprechenden einzugebenden Übernahme-Befehl über den Eingabeschalter 7 gekennzeichnet, speichert dieser Microrechner 5 die erfaßten und digitalisierten Werte in einen elektrisch änderbaren Festwertspeicher 6 ab. Bei späteren betriebstechnischen Messungen vergleicht der Microrechner 5 die der Ausgangsspannung des Fotoelements 2 der Lichtschranke entsprechenden Digitalwerten mit den in der "Lernphase" in den elektrisch änderbaren Festwertspeicher eingespeicherten Sollwerten und setzt entsprechend für die Auswertung die Bool'schen Größen zu der Aussage, daß der Flüssigkeitsstand im Behälter 3 entwedet "genügend" oder "nicht genügend" ist.

## Ansprüche

1. Schaltungsanordnung zur meßtechnischen Erfassung und Auswertung von binären Zustandswerten durch eine digitale elektronische Auswerteschaltung über ein Analogwerte erfassendes elektronisches Sensorelement, insbesondere zur Erfassung und Auswertung von Flüssigkeitsständen in elektrischen Hausgeräten, **dadurch gekennzeichnet,** daß dem Analogwerte erfassenden elektronischen Sensorelement (2) ein Analog-Digital-Wandler (4) nachgeschaltet ist, dessen digitale Ausgangswerte der elektronischen Auswerteschaltung (5) zugeführt werden, daß diese Auswerteschaltung eine Vergleichseinrichtung für Sollwerte und Istwerte aufweist und daß der Speicher (6) für die Sollwerte durch Übernahme von Digitalwerten über den Analog-Digital-Wandler (4) in Abhängigkeit von durch das Sensorelement (2) erfaßten Werten durch einen Übernahmebefehl setzbar ist.

2. Schaltungsanordnung nach Anspruch 1, dadurch gekennzeichnet, daß im Sollwertspeicher (6) lediglich ein binärcodierter Sollwert für einen der beiden binären Zustandswerte eingegeben ist.

3. Schaltungsnaordnung nach Anspruch 2, dadurch gekennzeichnet, daß der binärcodierte Sollwerte im Sollwertspeicher (6) gegenüber dem durch Erfassung eingelesenen Wert in Richtung auf den entsprechend binärcodierbaren Wert für den weiteren binären Meßwert verändert abgespeichert ist.

4. Schaltungsanordnung nach Anspruch 1, dadurch gekennzeichnet, daß je ein binärcodierter Sollwert für die binären Zustandswerte vom Sollwertspeicher (6) übernommen und als Vergleichswert für die beiden auszuwertenden Betriebs-Istwerte abgespeichert wird.

5. Schaltungsanordnung nach Anspruch 4, dadurch gekennzeichnet, daß die binärcodierten Sollwerte für die binären Zustandswerte gegenüber den durch Erfassung eingelesenen Werte in Richtung aufeinander angenähert verändert im Sollwert-Speicher (7) abgespeichert sind.

6. Schaltungsanordnung nach einem der Ansprüche 1 bis 5, dadurch gekennzeichnet, daß als Sollwert-Speicher (6) ein elektronisch programmierbarer Festwertspeicher angeordnet ist.

7. Schaltungsanordnung nach einem der Ansprüche 1 bis 5, dadurch gekennzeichnet, daß als Sollwert-Speicher (6) ein elektrisch löschbarer und programmierbarer Festwertspeicher angeordnet ist.